Europäisches Patentamt

European Patent Office

Office européen des brevets

(19)

(11) Publication number : **0 462 738 A2**

(12)

# EUROPEAN PATENT APPLICATION

(21) Application number : **91305248.6**

(51) Int. Cl.$^5$ : **H04Q 7/02, H04B 7/26**

(22) Date of filing : **11.06.91**

(30) Priority : **12.06.90 GB 9013129**

(43) Date of publication of application :
**27.12.91 Bulletin 91/52**

(84) Designated Contracting States :
**DE FR**

(71) Applicant : **BAND THREE RADIO LIMITED**
**Band Three House, Stroudley Road, Daneshill**
**Basingstoke, Hampshire RG24 OUG (GB)**
Applicant : **RACAL-VODAPAGE LIMITED**
**Western Road**
**Bracknell, Berkshire (GB)**

(72) Inventor : **Selby, Geoffrey Richard**
**17 Geralds Grove**
**Banstead, Surrey SM7 1NE (GB)**
Inventor : **Payne, Michael Wakefield**
**201 Andover Road**
**Newbury, Berkshire RG14 6NB (GB)**

(74) Representative : **Foster, David Martyn et al**
**MATHISEN MACARA & CO. The Coach House**
**6-8 Swakeleys Road**
**Ickenham Uxbridge UB10 8BZ (GB)**

(54) **Mobile radio communication system.**

(57) A radio communication system, such as a trunked private mobile radio system, comprises sites 12,14 and 16 each with its respective base station 6,8 and 10. Fixed radio units or dispatchers, for example 26,28 and 30, are located within the sites and mobiles, e.g. 32 and 34, are free to roam throughout the sites. When each dispatcher (e.g. dispatcher 26) is installed initially, a check is made of the quality of its radio communication not only with its local base station (base station 6) but with all the other base stations in the system. A list is stored of all those base stations with which it can communicate with at least a predetermined degree of quality. When a call is to be made between a dispatcher (e.g. dispatcher 26) and a mobile (e.g. mobile 34) in a different site, the check is made whether the base station of the latter site is included within the predetermined list. If it is, the radio communication link is established between dispatcher 26 and mobile 34 via base station 8, omitting base station 6. Mobile 34 communicates with base station 8 using one of the channels applicable to site 14, and dispatcher 26 is instructed to communicate direct with base station 8 using the same radio channel.

EP 0 462 738 A2

Fig.1.

The invention relates to a radio communication system by means of which radio communication can be established between a mobile radio unit (a "mobile") and a fixed radio unit (a "dispatcher") or between mobiles.

Such systems are known in which a plurality of radio communication areas or sites are set up, each having a base station incorporating radio transmitting and receiving equipment whose range to a mobile effectively defines the geographical extent of the respective site. The sites are geographically adjacent to each other (and may overlap to some extent, though need not do so) so as to cover a region. Each mobile active within the region establishes itself within the system by appropriate communication with the base station of the site in which it is located, such communication being via a radio control channel. The base stations are linked to each other by fixed links and to a central control station so that the position of each mobile is registered there. When a mobile moves to another site, it registers with the corresponding base station and this is signalled to the central station. When a dispatcher wishes to communicate with a particular mobile, the dispatcher signals this fact to its local base station, again by means of a control radio channel. If the mobile with which communication is desired is situated in the same site, the base station sets up a communication link between the dispatcher and the mobile by utilising a free radio communication channel from a plurality of predetermined radio communication channels available to it. This communication channel is thereafter used for communication from the dispatcher to the base station and thence to the mobile (and in the reverse direction, from the mobile to the base station and thence to the dispatcher). Because only a single channel is used, there is efficient use of the radio spectrum.

However, in the known system, if the mobile with which the dispatcher wishes to communicate is in a different site, the call will be set up from the dispatcher to its local base station, thence by the communication link between that base station and the base station of the site in which the mobile is situated, and finally from the latter base station to the mobile. This will necessitate the use of two radio communication channels, one used in the first site for communication between the dispatcher and its adjacent base station, and the other used in the second site for communication between its base station and the mobile. There is thus less efficient use of the available channels.

According to the invention, there is provided a radio communication system, comprising a plurality of geographically dispersed base stations each of which has respective radio transmitting and receiving means capable of operating on any one of a respective group of radio channels allocated for that base station, at least one mobile radio unit having radio transmitting and receiving means capable of operating on any of the radio channels of the base stations, the operating ranges of the base stations and the mobile radio unit defining for each base station a respective operational area or site within which the mobile unit can communicate with the base station using one of the radio channels allocated to that base station, at least one fixed radio unit incorporating radio transmitting and receiving means and capable of communicating by radio with a first one of the base stations using any one of the group of radio channels allocated to that base station, characterised in that the fixed radio unit is also capable of communicating by radio with one or more predetermined other ones of the base stations using a radio channel selected from the corresponding group of channels, and by control means operative when the mobile unit is not located within the site of the first base station but is located in a site whose base station is one of the said predetermined other ones of the base stations to establish communication between the fixed unit and the mobile unit via the base station of the site in which the mobile unit is located, the fixed unit communicating direct with that base station via a selected one of the group of channels allocated to that base station and the mobile unit communicating to that base station on the same selected channel.

According to the invention, there a radio communication system for enabling communication by radio (in either direction) between any one of a plurality of fixed radio units and any one of a plurality of mobile radio units each of which units incorporates radio transmitting and receiving means, comprising: a plurality of geographically dispersed fixed base stations each incorporating radio transmitting and receiving means whose operational range establishes a geographical area or site applicable to that base station and within which it can communicate by radio with any said mobile radio unit situated therein by means of a control radio channel respective to that site and by means of any selected one of a group of radio communication channels respective to that base station; each fixed radio unit being situated at a fixed position and capable of communicating with a particular one of the base stations by means of the control channel of that base station and by means of any selected one of the group of radio communication channels of that base station; each mobile unit being capable of moving within any of and among the sites; first control means operative when the mobile unit is situated within the site of the said particular one base station to set up the desired radio communication between the two units via that base station using a selected one of the group of radio communication channels allocated to that base station; and second control means capable when brought into operation when the base station of the site in which the mobile radio unit is located is not the said particular one base station, to set up radio communication between the two radio units using (a) direct radio communication between the mobile unit and the base station of its site on a selected one of the group of radio communication channels allocated to that site (b) direct radio communication between the fixed radio unit and the said particular one base station on a selected one of the group of radio communication channels allocated to the site of the latter base station and (c) and additional communication link between the two base stations; characterised by means storing for each fixed radio unit a list of predetermined others of the base stations with each of which that fixed unit can communicate with at least a predetermined quality of radio transmission by direct radio communication using one of the radio communication channels in the group respective to that base station; third control means responsive to a requirement signalled by any one of the fixed radio units or by any one of the mobile radio units to set up radio communication between those two units to determine whether the mobile radio unit is situated within the site of the said particular one base station and, if not, whether the mobile unit is situated within a site whose base station is included within the said list applicable to that fixed unit; fourth control means operative when the mobile unit is not located within the site of the said particular one base station but is located within a site whose base station is included in the said list to set up radio communication between the two units via the base station of the site within which the mobile radio unit is located, such radio communication using direct radio communication between the fixed unit and that base station on a selected one of the radio channels in the group respective to that base station and using direct radio communication between that base station and the mobile radio unit on the same selected channel; and means for bringing the second control means into operation when the base station of the site in which the mobile radio unit is located is neither the said particular one base station nor is included wthin the said list applicable to the fixed radio unit.

A radio communication system embodying the invention will now be described, by way of example only, with reference to the accompanying drawings in which:

Figure 1 is a diagrammatic drawing of the system; and

Figures 2 and 3 are flow charts for explaining the operation of the system.

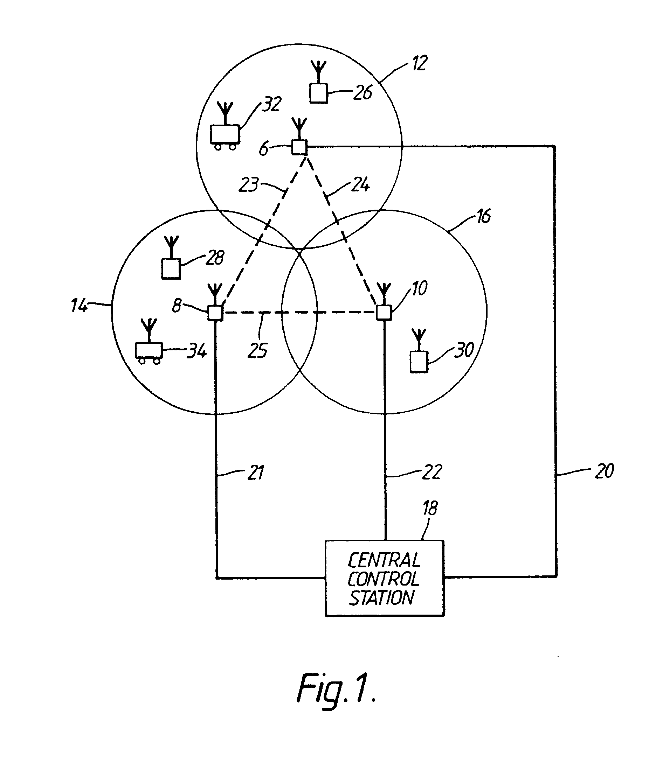

As shown in Figure 1, the system comprises (in this example) three base stations 6,8 and 10, each comprising radio transmitting and receiving equipment.

The base stations are connected to a central control station 18 by communication links 20,21 and 22, and are connected to each other via fixed or switched communication links 23,24 and 25 (which could in practice be via links within the central station). The links 20 to 25 may be land lines or, for example, radio links.

Each base station has allocated to it a plurality of radio channels including a number of radio communication channels and a control channel.

Within the system there will be located a number of fixed radio units or dispatchers, examples of which are shown at 26, 28 and 30. Each incorporates a radio transmitter and receiver unit. Also in the system will be mobiles, of which examples are shown at 32 and 34, these again being provided with radio transmitter and receiver units. The radio ranges of the base stations define respective sites within which the mobiles can communicate with the associated base stations. Thus, base station 6 defines a site 12, base station 8 defines a site 14 and base station 10 defines a site 16. The sites are shown as circular, though their exact shape will vary with the local terrain. As shown, the sites overlap to some extent, though this is not necessarily the case.

An active mobile (e.g. mobile 32) within the system will signal its presence to the base station (base station 6 in this example) of the site within which it is situated. This signalling will take place on the control channel of site 12. The base station registers the existence of the mobile within its site and signals this fact to the central controller 18 via the link 20.

The operation of the system will now be described, initially for the case where the dispatcher 26 wishes to set up a call with the mobile 32.

The dispatcher 26 signals this fact to its associated base station (base station 6 in this example), identifying the mobile with which it wishes to communicate. This is done by means of the control channel. The base station establishes that the mobile 32 is within its own site. The base station then utilises a free channel from the plurality of radio communication channels available to it and allocates this channel to provide the communication required. Thus, this channel is used for communication from the dispatcher to the base station and thence from the base station to the mobile, and also in the reverse direction - that is, from the mobile 32 to the base station 6 and from the base station 6 to the dispatcher 26. Such an arrangement makes effective use of the radio spectrum because only one radio channel is used for the call.

Each communication channel is a simplex channel, using one frequency for transmission in one direction and another frequency for transmission in the opposite direction. If no free channel is available at the time when the communication is to be established, then the dispatcher will normally have to queue for assignment of a channel when one becomes free.

Substantially the same procedure as has just been described is used when a mobile (such as mobile 32) wishes to communicate with a dispatcher (such as dispatcher 26) in the same site, and will not be described.

The system as so far described is a trunked private land mobile radio system and advantageously operates generally in accordance with a radio protocol established in MPT 1327, a standard issued by the United Kingdom Department of Trade and Industry in 1988. The frequencies of the radio channels used for communication may be around 200 MHz, for example.

The procedure when communication is to be established between a dispatcher in one site and a mobile in another is different, and will now be described.

Firstly, it is necessary to consider the initial installation of a dispatcher in the system.

When a dispatcher is initially installed, it of course has to be set up (for example, by correct positioning of its antenna and other adjustments) to ensure that it has effective and efficient communication with its base station. In the system being described, however, measurements are also made of the signal strengths of the radio communication between the dispatcher and the base stations of adjacent sites. In a practical case, dispatchers are usually arranged with their antennas in good physical positions and, particularly in urban areas where the sites are relatively close together, it will be found that a dispatcher can have effective radio communication with more than one base station. Thus, for example, dispatcher 26 (Figure 1) may be found to have adequate radio communication with base stations 8 and 10 as well as with its local base station 6.

During installation, therefore, the radio signal strength between the new dispatcher and each base station in the system (or at least those within possible radio range) is measured, using the normal control channels for those base stations. The signal strength on each such control channel is measured to check whether it reaches a required minimum standard (for example, this can be done by measuring the error rate of communication on each channel). In this way, those base stations which are within effective range of that dispatcher (i.e. whose radio strength attains a predetermined minimum) are identified. The identities of these base stations are stored in the central control station 18 in an "eligibility list" as being applicable to that particular dispatcher.

In practice, the setting up procedure could include the step of orientating the antenna of the dispatcher so as to maximise the number of base stations with which it can satisfactorily communicate.

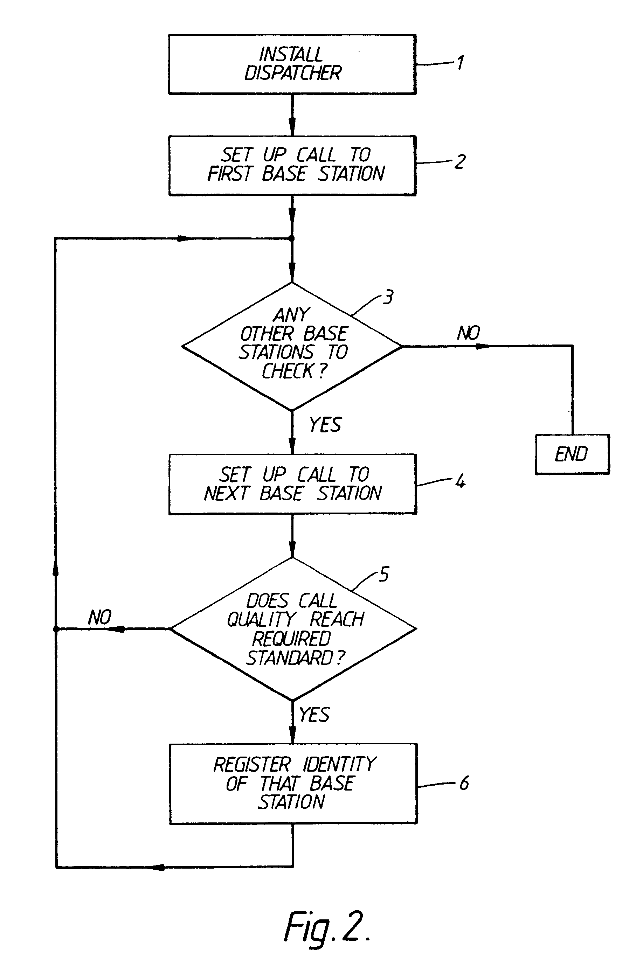

The foregoing procedure is shown in Figure 2.

Step 1 comprises the step of physically installing the dispatcher and setting up its transmitter and receiver and antenna.

Step 2 comprises the setting up of a test call to the local base station, and it is assumed that the proximity of this station ensures that the call is set up without difficulty.

At step 3, the system checks whether any other base station in the system exists which is at least likely to be within range of the dispatcher, and at step 4 a call to one such base station is set up or attempted.

The test calls are set up on the appropriate control channel applicable to the particular base station.

At step 5, the signal strength of the call is measured and compared with a minimum required figure of merit. If this figure of merit is not achieved, the call to that base station is disconnected and steps 3 and 4 are repeated.

If the signal strength exceeds the figure of merit, the identity of that base station is registered at the central control station, as indicated at step 6. The registration records the fact that the new dispatcher being installed can communicate satisfactorily with that base station.

Steps 3 and 4 are repeated until all the base stations have been tested.

The procedure thus establishes an "eligibility list" of all base stations with which the dispatcher can properly communicate.

The procedure could be elaborated by responding to a "NO" result from step 4 by adjusting the dispatcher (e.g. adjusting its antenna position) with a view to improving the communication link between the dispatcher and the particular base station under test and thus changing the result "NO" to the result "YES". Of course, such a step would have to be followed by a step of re-checking the communication links with any base stations already tested to ensure that any repositioning of the antenna had not adversely affected those links.

The foregoing procedure (after step 1) could be entirely automated, the results being transmitted to the network by means of a data message.

The procedure when a dispatcher wishes to make a call to a mobile in a different site will now be described.

Initially, the procedure would be as described above for a mobile within the same site. Thus, the dispatcher (dispatcher 26 in this example) would signal on the control channel applicable to its local base station, base station 6, that it wishes to set up a call with a mobile; in this example, it is assumed that the particular mobile is mobile 34 (in site 14). Via communication link 20, base station 6 now addresses the central control station and establishes that mobile 34 is located in site 14 (this having been recorded when mobile 34 activates itself within the system). A communication channel is then selected on which the mobile 34 is to communicate, this being an unoccupied one of the channels within the group of channels available in site 14. The central control station 18 now checks whether base station 8 is one of the base stations within the "eligibility list" of base stations registered with respect to dispatcher 26 (when that dispatcher was installed). Assuming that base station 8 is in this eligibility list, the central control station 18 instructs dispatcher 26 to communicate on the same radio communication channel as has been allocated to mobile 34. This channel is of course a channel applicable to the base station 8 and site 14, even though site 12 is the local site of dispatcher 26. Therefore, the radio communication channel between dispatcher 26 and mobile 34 will be set up via base station 8. Dispatcher 26 will communicate with base station 8 via the selected radio communication channel and communication will be passed on to mobile 34 by base station 8 using the same channel; communication in the reverse direction will be carried out in the same way.

The foregoing assumes that a radio communication channel is available within site 14 at the time when the call is set up. If one is not available, then both parties will normally have to queue until one is available.

Substantially the same procedure is followed if a mobile in one site wishes to communicate with a dispatcher in another site - for example, if mobile 34 wishes to communicate with dispatcher 26. Thus, in such a case mobile 34 signals to its local base station, base station 8, on the local control channel, that it wishes to communicate with dispatcher 26. Base station 8 will establish, via central control station 18, that dispatcher 26 is in another site, site 12. The central control station 18 now checks whether base station 8 is on the eligibility list of dispatcher 26. Finding that it is, in this example, a free radio channel is selected (assuming one is free) from the group of radio channels allocated to site 14, and the identity of this selected channel is sent to dispatcher 26 and to mobile 34, via the local control channel between base station 6 and dispatcher 26 and between base station 8 and mobile 34 respectively. Mobile 34 now uses this radio communication channel to communicate with dispatcher 26 via base station 8.

It will be apparent that the effect of the arrangement is that dispatcher 26 and mobile 34 communicate with each other as if dispatcher 26 is situated within the same site as mobile 34.

If (in considering the above examples in which calls are to be set up between dispatcher 26 and mobile 34), base station 8 is found not to be on the eligibility list of dispatcher 26, a different procedure has to be followed.

In such a case, a radio channel is selected out of the group allocated to base station 8 and is used for communication between mobile 34 and base station 8. However, in this case, the communication link is from base station 8 to base station 6 via the link 23 and thence over another selected radio channel to dispatcher 26, the latter channel being one selected out of the group of channels allocated to site 12. Two radio channels, and the link 23, are now being used for the call, and the efficiency is considerably reduced, thus illustrating the advantages of establishing the eligibility list referred to above.

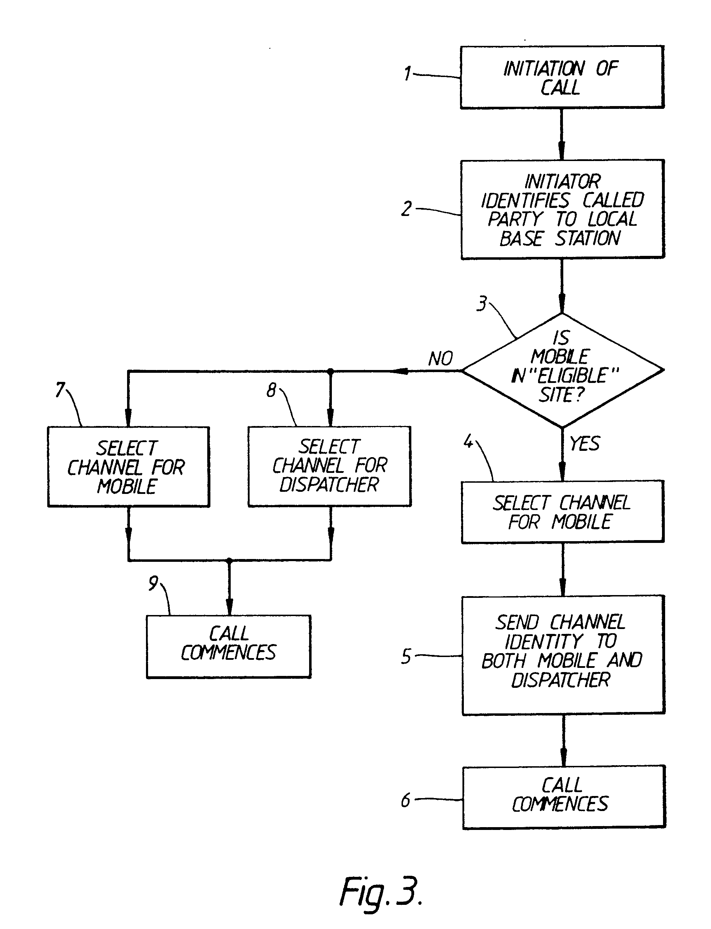

All the foregoing is illustrated in the flow chart of Figure 3.

Step 1 comprises the initiation of the call by the dispatcher (dispatcher 26 in this example) or by the mobile (mobile 34 in this example).

In step 2, the initiator of the call (dispatcher 26 or mobile 34) signals to its local base station the identity of the called party. In step 3, the local base station addresses the central control station 18 and enquires whether the mobile which is being called by the dispatcher, or which is initiating the call, (that is, mobile 34 in this example), is located within a site whose base station is on the eligibility list of the calling or called dispatcher (dispatcher 26).

If the answer is "YES", the procedure goes to step 4 and a particular radio communication channel is selected from the group of channels applicable to site 14. In step 5, the identity of this channel is sent to both parties in the call. It is sent to mobile 34 via the control channel between base station 8 and the mobile, and it is sent to dispatcher 26 via the control channel between base station 6 and the dispatcher.

At step 6, the call actually commences.

If the answer in step 3 is "NO", the procedure goes to steps 7 and 8. Step 7 comprises the selection of a radio channel for communication between mobile 34 and base station 8, being a radio channel selected from the group allocated to site 14. Step 8 comprises the selection of a radio communication channel for communication between dispatcher 26 and base station 6, this being a channel selected from the group allocated to site 12. Step 9 comprises the making of the call, from dispatcher 26 to base station 6, thence via link 23 to base station 8 and then from base station 8 to mobile 34 (or in the reverse direction).

**Claims**

1. A radio communication system, comprising a plurality of geographically dispersed base stations (6,8,10) each of which has respective radio transmitting and receiving means capable of operating on any one of a respective group of radio channels allocated for that base station (6,8,10), at least one mobile radio unit (32,34) having radio transmitting and receiving means capable of operating on any of the radio channels of the base stations (6,8,10), the operating ranges of the base stations (6,8,10) and the mobile radio unit (32,34) defining for each base station (6,8,10) a respective operational area or site (12,14,16) within which the mobile unit (72,34) can communicate with the base station (6,8,10) using one of the radio channels allocated to that base station (6,8,10), at least one fired radio unit (26,28,30) incorporating radio transmitting and receiving means and capable of communicating by radio with a first one of the base stations (6,8,10) using any one of the group of radio channels allocated to that base station (6,8,10), characterised in that the fixed radio unit (26,28,30) is also capable of communicating by radio with one or more predetermined other ones of the base stations (6,8,10) using a radio channel selected from the corresponding group of channels, and by control means operative when the mobile unit (32,34) is not located within the site of the first base station (6,8,10) but is located in a site whose base station (6,8,10) is one of the said predetermined other ones of the base stations (6,8,10) to establish communication between the fired unit (26,28,30) and the mobile unit (32,34) via the base station (6,8,10) of the site (12,14,16) in which the mobile unit (32,34) is located, the fired unit (26,28,30) communicating direct with that base station (6,8,10) via a selected one of the group of channels allocated to that base station (6,8,10) and the mobile unit (32,34) communicating to that base station (6,8,10) on the same selected channel.

2. A system according to claim 1, characterised in that the first base station (6,8,10) and each of the predetermined other ones of the base stations (6,8,10) has a respective control channel, additional to its group of available radio communication channels, the control channel of the first base station (6,8,10) being used to communicate control information to the fixed unit (26,28,30) and to any said mobile unit (32,34) in the site (12,14,16) of the first base station (6,8,10) and the control channels of the other base stations (6,8,10) being used to communicate control information to any said mobile unit (32,34) in their respective sites (12,14,16), and in that the control means comprises means communicating the identity of the selected radio communication channel to the mobile unit (32,34) via the control channel of the base station (6,8,10) of the site (12,14,16) in which the mobile unit (32,34) is located and to the fixed unit (26,28,30) via the control channel of the first base station (6,8,10).

3. A radio communication system for enabling communication by radio (in either direction) between any one of a plurality of fixed radio units (26,28,30) and any one of a plurality of mobile radio units (32,34) each of which units (26,28,30,32,34) incorporates radio transmitting and receiving means, comprising: a plurality of geographically dispersed fired base stations (6,8,10) each incorporating radio transmitting and receiving means whose operational range establishes a geographical area or site (12,14,16) applicable to that base station (6,8,10) and within which it can communicate by radio with any said mobile radio unit (32,34) situated therein by means of a control radio channel respective to that site (12,14,16) and by means of any selected one of a group of radio communication channels respective to that base station (6,8,10); each fired radio unit (26,28,30) being situated at a fired position and capable of communicating with a particular one of the base stations (6,8,10) by means of the control channel of that base station and by means of any selected one of the group of radio communication channels of that base station (6,8,10); each mobile unit (32,34) being capable of moving within any of and among the sites (12,14,16); first control means operative when the mobile unit (32,34) is situated within the site of the said particular one base station (6,8,10) to set up the desired radio communication between the two units via that base station (6,8,10) using a selected one of the group of radio communication channels allocated to that base station (6,8,10); and second control means capable when brought into operation when the base station (6,8,10) of the site (12,14,16) in which the mobile radio unit (32,34) is located is not the said particular one base station (6,8,10), to set up radio communication between the two radio units using (a) direct radio communication between the mobile unit (32,34) and the base station (6,8,10) of its site (12,14,16) on a selected one of the group of radio communication channels allocated to that site (12,14,16) (b) direct radio communication between the fired radio unit (26,28,30) and the said particular one base station (6,8,10) on a selected one of the group of radio communication channels allocated to the site (12,14,16) of the latter base station (6,8,10) and (c) and additional communication link between the two base stations (6,8,10); characterised by means storing for each fired radio unit (26,28,30) a list of predetermined others of the base stations (6,8,10) with each of which that fired unit (26,28,30) can communicate with at least a predetermined quality of radio transmission by direct radio communication using one of the radio communication channels in the group respective to that base station (6,8,10); third control means responsive to a requirement signalled by any one of the fixed radio units (26,28,30) or by any one of the mobile radio units (32,34) to set up radio communication between those two units to determine whether the mobile radio unit (32,34) is situated within the site of the said particular one base station (6,8,10) and, if not, whether the mobile unit (32,34) is situated within a site (12,14,16) whose base station (6,8,10) is included within the said list applicable to that fixed unit (26,28,30); fourth control means operative when the mobile unit (32,34) is not located within the site of the said particular one base station (6,8,10) but is located within a site whose base station (6,8,10) is included in the said list to set up radio communication between the two units via the base station (6,8,10) of the site (12,14,16) within which the mobile radio unit (32,34) is located, such radio communication using direct radio communication between the fired unit (26,28,30) and that base station (6,8,10) on a selected one of the radio channels in the group respective to that base station and using direct radio communication between that base station (6,8,10) and the mobile radio unit (32,34) on the same selected channel; and means for bringing the second control means into operation when the base station (6,8,10) of the site (12,14,16) in which the mobile radio unit (32,34) is located is neither the said particular one base station (6,8,10) nor is included wthin the said list applicable to the fixed radio unit (26,28,30).

4.  A system according to claim 3, characterised in that the fourth control means comprises means for communicating to the fired radio unit (26,28,30) the identity of the said selected one of the radio channels via the control channel of the said particular one base station (6,8,10).

5.  A system according to any preceding claim, characterised in that at least some of the sites (12,14,16) overlap each other.

6.  A system according to any preceding claim, characterised in that at least some of the sites (12,14,16) do not overlap each other.

Fig.1.

INSTALL DISPATCHER — 1

SET UP CALL TO FIRST BASE STATION — 2

ANY OTHER BASE STATIONS TO CHECK ? 3

NO → END

YES

SET UP CALL TO NEXT BASE STATION — 4

DOES CALL QUALITY REACH REQUIRED STANDARD ? 5

NO

YES

REGISTER IDENTITY OF THAT BASE STATION — 6

Fig.2.

Fig.3.